# EUROPÄISCHE PATENTANMELDUNG

(11) **EP 2 392 290 A2**
(43) Veröffentlichungstag der Anmeldung: **07.12.2011**
(21) Anmeldenummer: 11168737.2
(22) Anmeldetag: 03.06.2011
(51) Int. Cl.: A61C 13/00

(54) **Verfahren zur Herstellung implantatgetragenen zahnprothetischen Strukturen**

(30) Priorität: 04.06.2010 DE 102010022647
(71) Anmelder: Klar, Andreas, 12683 Berlin (DE)
(72) Erfinder: Klar, Andreas, 12683 Berlin (DE); Weber, Heiner, Prof. Dr., 72070 Tübingen (DE)
(74) Vertreter: Eisenführ, Speiser & Partner

(57) **Zusammenfassung**

Verfahren zur Herstellung von implantatgetragenen zahnprothetischen Strukturen (12), mit den Schritten,
(A) einen vorgegebenen Abformpfosten (6) jeweils auf mindestens einem Implantat im Kiefer eines Patienten lösbar anzuordnen,
(B) vom Kiefer eine Abformung (8) aus geeignetem Abformmaterial so herzustellen, dass der mindestens eine Abformpfosten (6) von dem zugehörigen Implantat gelöst wird und an der Abformung (8) verbleibt,
(C) die Position und Ausrichtung des mindestens einen Abformpfostens (6) in der Abformung (8) mit einer Abtasteinrichtung zu erfassen und entsprechende erste Daten zu erzeugen,
(D) aus den ersten Daten in einer Berechnungseinrichtung zweite Daten zu errechnen, die die Positionierung und Ausrichtung, des jeweiligen Implantates angeben,
(E) unter Verwendung der zweiten Daten in der Berechnungseinrichtung eine gewünschte Konstruktion für die zahnprothetische Struktur angebende dritte Daten zu erzeugen,
(F) unter Verwendung der dritten Daten auf einer numerisch gesteuerten Maschine die zahnprothetische Struktur herzustellen.

## Beschreibung

Die Erfindung betrifft ein Verfahren zur Herstellung von implantatgetragenen zahnprothetischen Strukturen.

Implantatgetragene zahnprothetische Strukturen umfassen beispielsweise Brücken, Stege und Kombinationen dieser Zahnersatzteile sowie sonstige Zahnersatzkonstruktionen und deren Teile für Implantatversorgungen.

Wichtig ist es bei einem Verfahren der eingangs genannten Art, die Befestigung eines zahnprothetischen Gerüstes oder einer zahnprothetischen Struktur insbesondere an zwei oder mehr Implantaten so vorzunehmen, dass Spannungen im Gerüst bzw. in der Struktur und in der darauf sitzenden Suprastruktur vermieden werden. Denn ansonsten treten Druck- und Zugbelastungen auf, die sich wiederum auf die osseointegrierten Implantate auswirken und zwangsläufig zum Abbau von wichtiger Knochensubstanz führen, wodurch langfristig stets mit dem Verlust eines oder mehrerer Implantate zu rechnen ist.

Der bislang übliche Weg über die Herstellung eines Modells ist zeitraubend. Außerdem hat sich herausgestellt, dass sich bei Verwendung eines Modells nicht die gewünschte hochpräzise Passgenauigkeit erzielen lässt, sondern Ungenauigkeiten in Kauf genommen werden müssen, die aus der Herstellung des Modells resultieren.

Es ist nun Aufgabe der vorliegenden Erfindung, für das eingangs genannte Verfahren eine Lösung vorzuschlagen, mittels derer sich zahnprothetische Strukturen mit Hilfe von CAD/CAM-Verfahren auf einfache und zugleich effektive Weise anfertigen und dabei die bei der Modellherstellung auftretenden Fehler und Ungenauigkeiten vermeiden lassen und auch Verarbeitungszeit einsparen lässt.

Gemäß einem ersten Aspekt der vorliegenden Erfindung wird diese Aufgabe gelöst mit einem Verfahren zur Herstellung von implantatgetragenen zahnprothetischen Strukturen, mit den Schritten,
(A) einen vorgegebenen Abformpfosten jeweils auf mindestens einem Implantat im Kiefer eines Patienten lösbar anzuordnen,
(B) vom Kiefer eine Abformung aus geeignetem Abformmaterial so herzustellen, dass die Abformung in Eingriff mit einem freien Ende des mindestens einen auf dem zugehörigen Implantat angeordneten Abformpfostens gelangt, und die Abformung vom Kiefer so abzunehmen, dass der mindestens eine Abformpfosten von dem zugehörigen Implantat gelöst wird und an der Abformung verbleibt,
(C) die Position und Ausrichtung des mindestens einen Abformpfostens in der Abformung mit einer Abtasteinrichtung zu erfassen und entsprechende erste Daten zu erzeugen,
(D) aus den ersten Daten in einer Berechnungseinrichtung zweite Daten zu errechnen, die die Positionierung und Ausrichtung, insbesondere Winkel, Höhe und Rotation, des jeweiligen Implantates angeben,
(E) unter Verwendung der zweiten Daten in der Berechnungseinrichtung eine gewünschte Konstruktion für die zahnprothetische Struktur angebende dritte Daten zu erzeugen,
(F) unter Verwendung der dritten Daten auf einer numerisch gesteuerten Maschine die zahnprothetische Struktur herzustellen und
(G) die so hergestellte zahnprothetische Struktur auf den Implantaten im Kiefer des Patienten zu befestigen.

Mit diesem Aspekt schlägt die Erfindung einen vereinfachten Arbeitsablauf mit Abdrucknahme vor, indem die Abdrucknahme von den Implantatpositionen direkt vermessen wird. Hiernach wird nach erfolgter Implantation auf den im Kiefer des Patienten befindlichen Implantaten ein sog. Abformpfosten lösbar angeordnet (Schritt A). Anschließend wird mithilfe geeigneten Materials eine übliche Abformung hergestellt, in der die Abformpfosten bei Abnahme vom Kiefer stecken bleiben (Schritt B). Die Abformung wird dann eingescannt (Schritt C) und aus den so erzeugten Abtastdaten (erste Daten) die Positionierung und Ausrichtung, insbesondere Winkel, Höhe und Rotation, des jeweiligen Implantats ermittelt (Schritt D). Mit Hilfe der so erzeugten zweiten Daten erfolgt anschließend die Konstruktion der zahntechnischen Arbeit bzw. Struktur (Schritt E) und findet unter Verwendung der dabei erzeugten Konstruktionsdaten (dritte Daten) die Fertigung auf numerisch gesteuerten Maschinen statt (Schritt F), bevor dann die zahntechnische Arbeit bzw. Struktur im Kiefer des Patienten im Mund befestigt wird (Schritt G).

Bevorzugte Ausführungen und Weiterbildungen des ersten Aspektes der vorliegenden Erfindung sind in den abhängigen Ansprüchen 2 bis 9 angegeben.

So kann bevorzugt im Schritt (A) eine Mehrzahl von vorgegebenen Abformpfosten auf einer entsprechenden Mehrzahl von Implantaten lösbar angeordnet werden, im Schritt (B) vom Kiefer eine Abformung aus geeignetem Abformmaterial so hergestellt werden, dass die Abformung in Eingriff mit den freien Enden der auf den Implantaten angeordneten Abformpfosten gelangt, und die Abformungen vom Kiefer so abgenommen werden, dass die Abformpfosten von den Implantaten gelöst werden und an der Abformung verbleiben, im Schritt (C) die Position und Ausrichtung der Abformpfosten in der Abformung erfasst und entsprechend erste Daten erzeugt werden und im Schritt (D) aus den ersten Daten zweite Daten errechnet werden, die die Positionierung und Ausrichtung der Implantate angeben. Diese Ausführung ist somit für eine Herstellung einer zahnprothetischen Struktur vorgesehen, die im montierten Zustand von mehreren Implantaten gleichzeitig getragen wird, so dass eine entsprechende Anzahl von Abformpfosten zu verwenden ist.

Bevorzugt wird im Schritt (C) zusätzlich zur Position und Ausrichtung des Abformpfostens in der Abformung auch die zu diesem benachbarte Umgebung erfasst.

Ferner wird bevorzugt nach dem Schritt (B) und vor dem Schritt (C) ein zusätzlicher Schritt (B1) ausgeführt, auf dem mindestens einen in der Abformung befindlichen Abformpfosten ein vorgegebenes Normteil lösbar zu befestigen, und werden im Schritt (C) die Position und Ausrichtung des in der Abformung auf dem zugehörigen Abformpfosten befestigten Normteils mit der Abtasteinrichtung erfasst und entsprechende Daten erzeugt. Sofern die Herstellung einer zahnprothetischen Struktur vorgesehen ist, die im montierten Zustand von mehreren Implantaten gleichzeitig getragen werden soll, wird im Schritt (B1) auf den in der Abformung befindlichen Abformpfosten jeweils ein vorgegebenes Normteil lösbar befestigt und werden im Schritt (C) die Position und Ausrichtung der in der Abformung auf den Abformpfosten befestigten Normteile erfasst und entsprechend erste Daten erzeugt. Durch die Verwendung von für jedes individuelle Implantatsystem spezifisch hergestellten Normteilen lässt sich eine besonders präzise Abtastung erzielen, nicht zuletzt weil derartige Normteile in der Regel sehr präzise hergestellt und auf das jeweilige Implantatsystem individuell abgestimmt sind und deshalb auch ein exaktes Abbild für das zu verwendende Implantatsystem bilden.

Bei einer Weiterbildung der zuvor beschriebenen Ausführung wird im Schritt (C) zusätzlich zur Position und Ausrichtung des in der Abformung auf dem zugehörigen Abformpfosten befestigten Normteils auch die zu diesem benachbarte Umgebung erfasst.

Bei einer weiteren bevorzugten Weiterbildung der zuvor genannten Ausführung werden im Schritt (D) die ersten Daten, bei denen es sich ja um die Abtastdaten handelt, durch in der Berechnungseinrichtung hinterlegte, zu dem jeweiligen Normteil passende geometrische Daten ersetzt, aus denen dann die zweiten Daten errechnet werden, die die Positionierung und Ausrichtung, insbesondere Winkel, Höhe und Rotation, des jeweiligen Implantates angeben. Demnach werden bei dieser Ausführung nach Einscannen der Abformung die Positionierung und Ausrichtung, insbesondere Winkel, Höhe und Rotation, des jeweiligen Implantates über hinterlegte, zum jeweiligen Implantatsystem passende geometrische Daten durch eine hierfür geeignete Software errechnet.

Bei einer weiteren Ausführung der vorliegenden Erfindung werden im Schritt (D) in der Berechnungseinrichtung aus den zweiten Daten, die die Positionierung und Ausrichtung des jeweiligen Implantates angeben, vierte Daten erzeugt, die virtuell ein Negativmodell beschreiben, und im Schritt (E) anstelle der zweiten Daten die vierten Daten verwendet werden, um die dritten Daten zu erzeugen, die eine gewünschte Konstruktion für die zahnprothetische Struktur angeben und somit die eigentlichen Konstruktionsdaten bilden.

Zweckmäßigerweise werden im Schritt (D) zweite Daten errechnet, die die Positionierung und Ausrichtung, insbesondere Winkel, Höhe und Rotation, des jeweiligen Implantates relativ zu einem für alle im Kiefer befindlichen Implantate ge-Itenden definierten Bezugspunkt angeben. Durch die Bestimmung eines gemeinsamen für alle Implantate geltenden definierten Bezugspunktes lässt sich die Genauigkeit des Verfahrens bei Bedarf noch weiter steigern.

Gemäß einem zweiten Aspekt der vorliegenden Erfindung wird die zuvor genannte Aufgabe gelöst mit einem Verfahren zur Herstellung von implantatgetragenen, zahnprothetischen Strukturen, mit den Schritten,
(A) einen vorgegebenen Abformpfosten, der einen ersten Abschnitt und einen auf dem ersten Abschnitt lösbar angeordneten zweiten Abschnitt aufweist, mit dem ersten Abschnitt jeweils auf mindestens einem Implantat im Kiefer eines Patienten lösbar anzuordnen,
(B) vom Kiefer eine Abformung aus geeignetem Abformmaterial so herzustellen, dass die Abformung in Eingriff mit einem freien Ende des zweiten Abschnittes des mindestens einen auf dem zugehörigen Implantat angeordneten Abformpfostens gelangt, und die Abformung vom Kiefer so abzunehmen, dass der zweite Abschnitt vom ersten Abschnitt des mindestens einen Abformpfostens gelöst wird und an der Abformung verbleibt,
(C) die Position und Ausrichtung des zweiten Abschnittes des Abformpfostens in der Abformung mit einer Abtasteinrichtung zu erfassen und entsprechende erste Daten zu erzeugen,
(D) aus den ersten Daten in einer Berechnungseinrichtung zweite Daten zu errechnen, die die Positionierung und Ausrichtung, insbesondere Winkel, Höhe und Rotation, des jeweiligen Implantates angeben,
(E) unter Verwendung der zweiten Daten in der Berechnungseinrichtung eine gewünschte Konstruktion für die zahnprothetische Struktur angebende dritte Daten zu erzeugen,
(F) unter Verwendung der dritten Daten auf einer numerisch gesteuerten Maschine die zahnprothetische Struktur herzustellen und
(G) die so hergestellte zahnprothetische Struktur auf den Implantaten im Kiefer des Patienten zu befestigen.

Im Gegensatz zum ersten Aspekt wird mit dem zweiten Aspekt der vorliegenden Erfindung ein zweigeteilter Abformpfosten mit einem ersten Abschnitt und einem auf dem ersten Abschnitt lösbar angeordneten zweiten Abschnitt verwendet (Schritt A). Bei der Abdrucknahme verbleibt dann nicht der gesamte Abformpfosten, sondern nur dessen zweiter Abschnitt in der Abformung (Schritt B). Der Vorteil eines solchen Verfahrens besteht insbesondere darin, dass während der Entfernung des Abdruckes in Situationen mit geneigt oder gekippt stehenden Implantaten die Gefahr einer Beschädigung der Oberfläche der Implantate besonders gering ist und sich außerdem erst zu einem späteren Zeitpunkt die Gelegenheit bieten kann, den noch im Mund befindlichen ersten Abschnitt des mindestens einen Abformpfostens in aller Ruhe zu entfernen.

Bevorzugte Ausführungen und Weiterbildungen des zweiten Aspektes der vorliegenden Erfindung sind in den abhängigen Ansprüchen 11 bis 14 angegeben.

So kann bevorzugt als zweiter Abschnitt des mindestens einen Abformpfostens ein Normteil verwendet werden. Durch die Verwendung von für jedes individuelle Implantatsystem spezifisch hergestellten Normteilen lässt sich eine besonders präzise Abtastung erzielen, nicht zuletzt, weil derartige Normteile in der Regel sehr präzise hergestellt und auf das jeweilige Implantatsystem abgestimmt sind und deshalb auch ein exaktes Abbild für das zu verwendende Implantatsystem bilden.

Außerdem kann als erster Abschnitt des mindestens einen Abformpfostens ein Stift und als zweiter Abschnitt des mindestens einen Abformpfostens eine zum ersten Abschnitt passende und auf diesen aufsteckbare Hülse verwendet werden, wodurch sich auf konstruktiv besonders einfache Weise eine präzise und effektive arbeitende lösbare Verbindung realisieren lässt.

Bei einer weiteren bevorzugten Ausführung wird nach Schritt (B) und vor Schritt (C) zusätzlich ein Schritt (B1) ausgeführt, den ersten Abschnitt des mindestens einen Abformpfostens vom Implantat im Kiefer des Patienten zu lösen und am zweiten Abschnitt des mindestens einen Abformpfostens in der Abformung anzuordnen, und werden im Schritt (C) die Position und Ausrichtung des mindestens einen aus dem ersten Abschnitt und dem zweiten Abschnitt wieder zusammengesetzten vollständigen Abformpfostens in der Abformung mit einer Abtasteinrichtung erfasst und entsprechend erste Daten erzeugt. Bei dieser Ausführung wird somit nach der Abdrucknahme (Schritt B) auch der erste Abschnitt des mindestens einen Abformpfostens im Mund des Patienten gelöst und auf den in der Abformung bereits befindlichen zweiten Abschnitt wieder angeordnet und somit in die Abformung zurückgesetzt, was der sog. "Reseating"-Technik entspricht, um den dann vervollständigten Abformpfosten in der Abformung entsprechend abzutasten (Schritt C).

Alternativ wird bevorzugt nach Schritt (B) und vor Schritt (C) zusätzlich ein Schritt (B1) durchgeführt, auf dem in der Abformung befindlichen zweiten Abschnitt des mindestens einen Abformpfostens ein vorgegebenes Normteil lösbar zu befestigen, und werden im Schritt (C) die Position und Ausrichtung des in der Abformung auf dem zweiten Abschnitt des zugehörigen Abformpfostens befestigten Normteils mit einer Abtasteinrichtung erfasst und entsprechende erste Daten erzeugt. Anstelle der zuvor erwähnten "Reseating"-Technik mit Entfernung des ersten Abschnittes des mindestens einen Abformpfostens aus dem Mund des Patienten wird bei dieser Ausführung ein geeignetes Normteil direkt auf den dann bereits in der Abformung befindlichen zweiten Abschnitt des mindestens einen Abformpfostens aufgesetzt, um die dann aus dem zweiten Abschnitt des mindestens einen ursprünglichen Abformpfostens und dem aufgesetzten Normteil gebildete Anordnung entsprechend abzutasten.

Gemäß einem dritten Aspekt der vorliegenden Erfindung wird die zuvor genannte Aufgabe gelöst mit einem Verfahren zur Herstellung von implantatgetragenen zahnprothetischen Strukturen, mit den Schritten
(A) ein vorgegebenes Markierungselement jeweils auf mindestens einem Implantat im Kiefer eines Patienten lösbar anzuordnen,
(B) die Position und Ausrichtung des auf dem zugehörigen Implantat im Kiefer des Patienten befestigten Markierungselements im Mund des Patienten mit einer Abtasteinrichtung zu erfassen und entsprechende erste Daten zu erzeugen,
(C) aus den ersten Daten in einer Berechnungseinrichtung zweite Daten zu errechnen, die die Positionierung und Ausrichtung, insbesondere Winkel, Höhe und Rotation, des jeweiligen Implantates angeben,
(D) unter Verwendung der zweiten Daten in der Berechnungseinrichtung eine gewünschte Konstruktion für die zahnprothetische Struktur angebende dritte Daten zu erzeugen,
(E) unter Verwendung der dritten Daten auf einer numerisch gesteuerten Maschine die zahnprothetische Struktur herzustellen und
(F) die so hergestellte zahnprothetische Struktur auf dem mindestens einem Implantat im Kiefer des Patienten zu befestigen.

Im Gegensatz zu den ersten und zweiten Aspekten, bei denen jeweils mit der Abnahme der Abformung entweder der gesamte Abformpfosten (erster Aspekt) oder der zweite Abschnitt des Abformpfostens (zweiter Aspekt) nach Art der sog.

"Pick-up"-Methode direkt entfernt werden, wird mit dem dritten Aspekt der vorliegenden Erfindung ein vereinfachter Arbeitsablauf ohne Abdrucknahme vorgeschlagen. Hierzu werden nach erfolgter Implantation auf den im Kiefer des Patienten befindlichen Implantaten vorgegebene Markierungselemente lösbar angeordnet (Schritt A) und findet direkt im Mund des Patienten eine Abtastung zur Erfassung von Position und Ausrichtung der Markierungselemente statt (Schritt B). Aus den so erzeugten Abtastdaten (erste Daten) werden dann zweite Daten errechnet, die die Positionierung und Ausrichtung, insbesondere Winkel, Höhe und Rotation, des jeweiligen Implantates angeben (Schritt C). Unter Verwendung dieser zweiten Daten erfolgt die Konstruktion der zahntechnischen Arbeit bzw. Struktur (Schritt D). Mit Hilfe der so erzeugten Konstruktionsdaten (dritte Daten) findet eine Fertigung auf numerisch gesteuerten Maschinen statt (Schritt E), bevor die so hergestellte zahnprothetische Struktur auf den zugehörigen Implantaten im Kiefer des Patienten befestigt wird (Schritt F).

Bevorzugte Ausführungen und Weiterbildungen des zweiten Aspektes der vorliegenden Erfindung sind in den abhängigen Ansprüchen 16 bis 21 angegeben.

So kann als Markierungselement bevorzugt ein herkömmlicher Abformpfosten und/oder ein vorgegebenes Normteil, das für ein bestimmtes Implantatsystem spezifisch hergestellt ist und dieses Implantatsystem genau abbildet, verwendet werden.

Bei einer bevorzugten Ausführung wird im Schritt (A) eine Mehrzahl von vorgegebenen Markierungselementen auf eine entsprechende Mehrzahl von Implantaten lösbar angeordnet, werden im Schritt (B) die Position und Ausrichtung der auf den Implantaten befestigten Markierungselemente erfasst und entsprechend erste Daten erzeugt, werden im Schritt (C) aus den ersten Daten zweite Daten errechnet, die die Positionierung und Ausrichtung der Implantate angeben, und wird im Schritt (F) die hergestellte zahnprothetische Struktur auf den Implantaten befestigt. Diese Ausführung ist somit für die Herstellung einer zahnprothetischen Struktur geeignet, die im montierten Zustand von mehreren Implantaten getragen wird.

Bevorzugt wird im Schritt (B) zusätzlich zur Position und Ausrichtung des auf dem zugehörigen Implantat befestigten Markierungselements auch die zu diesem benachbarte Umgebung erfasst.

Bei einer weiteren bevorzugten Ausführung werden im Schritt (C) in der Berechnungseinrichtung aus den zweiten Daten, die ja die Position und Ausrichtung der Implantate angeben, vierte Daten erzeugt, die virtuell ein Negativmodell beschreiben, und im Schritt (D) anstelle der zweiten Daten die vierten Daten verwendet, um die dritten Daten zu erzeugen, die eine gewünschte Konstruktion für die zahnprothetische Struktur angeben und somit Konstruktionsdaten bilden.

Bei einer weiteren bevorzugten Ausführung werden im Schritt (C) die ersten Daten durch in der Berechnungseinrichtung hinterlegte, zu dem jeweiligen Markierungselement passende geometrische Daten ersetzt und aus diesen geometrischen Daten die zweiten Daten errechnet, die die Positionierung und Ausrichtung, insbesondere Winkel, Höhe und Rotation, des jeweiligen Implantates angeben. Somit werden nach direkter Abtastung im Mund des Patienten über hinterlegte, zum Implantatsystem passende, geometrische Daten die Positionierung und Ausrichtung, insbesondere Winkel, Höhe und Rotation, des jeweiligen Implantates errechnet.

Bei einer weiteren bevorzugten Ausführung werden im Schritt (C) zweite Daten errechnet, die die Positionierung und Ausrichtung, insbesondere Winkel, Höhe und Rotation, des jeweiligen Implantates relativ zu einem für alle Implantate geltenden definierten Bezugspunkt angeben. Durch die Bestimmung eines gemeinsamen für alle Implantate geltenden definierten Bezugspunktes lässt sich die Genauigkeit des Verfahrens bei Bedarf noch weiter steigern.

Die zuvor erwähnten Berechnungsschritte können bevorzugt mithilfe einer CAD-Software durchgeführt werden.

Der erfindungsgemäße Arbeitsablauf mit Abdrucknahme gemäß dem ersten Aspekt oder ohne Abdrucknahme gemäß dem zweiten Aspekt hilft, ansonsten bei der Modellerstellung auftretende Fehler zu vermeiden. Durch die erfindungsgemäße direkte Bearbeitung ergibt sich ferner eine spürbare Zeitersparnis, so dass die Erstellung eines Provisoriums innerhalb von maximal vier Stunden möglich ist.

Nachfolgend werden bevorzugte Ausführungsbeispiele der Erfindung anhand der beiliegenden Zeichnungen näher erläutert. Es zeigen:
- Fig. 1: schematisch in perspektivischer Ansicht einen mit zwei Implantaten versehenen Abschnitt eines im Mund eines Patienten befindlichen Kiefers;
- Fig. 2: schematisch in perspektivischer Ansicht den Abschnitt des Kiefers von Fig. 1 mit auf den Implantaten lösbar angeordneten Abformpfosten gemäß einem bevorzugten Ausführungsbeispiel der Erfindung;
- Fig. 3: schematisch in perspektivischer Ansicht den Abschnitt des Kiefers von Fig. 1 mit einer darauf ausgebildeten Abformung;
- Fig. 4: schematisch die Abformung von Fig. 3 nach Entfernung vom Kiefer in einer gegenüber Fig. 3 geänderten perspektivischen Ansicht;
- Fig.5: schematisch in perspektivischer Ansicht eine fertig gestellte zahnprothetische Struktur zur Befestigung auf den Implantaten im Kiefer gemäß Fig. 1;
- Fig. 6: schematisch die Abformung von Fig. 4 in gleicher perspektivischer Ansicht mit auf den Abformpfosten aufgesetzten Normteilen; und
- Fig. 7: schematisch in perspektivischer Ansicht der Kiefer von Fig. 1 mit auf den Implantaten angeordneten stift- oder pfostenförmigen Markierungselementen.

Nachfolgend wird ein Verfahren zur Herstellung von implantatgetragenen zahnprothetischen Strukturen gemäß zweier bevorzugter Ausführungsbeispiele näher beschrieben.

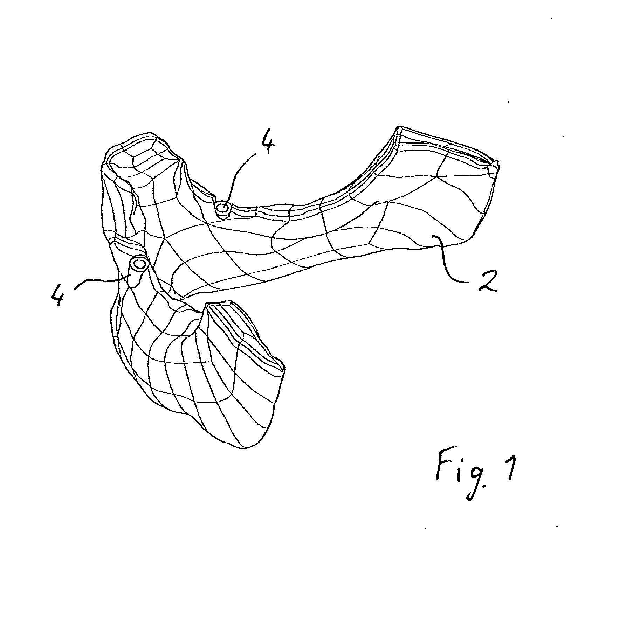

Ausgangspunkt in beiden Fällen ist ein Kiefer, der in Fig. 1 zumindest abschnittsweise in perspektivischer Ansicht schematisch gezeigt und mit dem Bezugszeichen "2" gekennzeichnet ist. In dem in Fig. 1 gezeigten Kiefer 2 sind zwei Implantate 4 eingesetzt, die zur Befestigung einer an späterer Stelle noch beschriebenen zahnprothetischen Struktur vorgesehen sind.

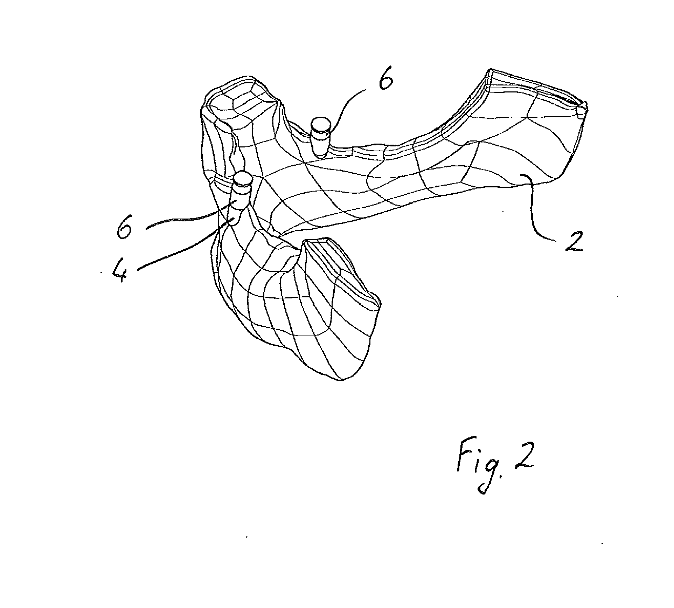

Nach erfolgter Implantation, also nach Einarbeitung von Implantaten im Kiefer des Patienten, wie in Fig. 1 anhand der Implantate 4 schematisch gezeigt ist, wird gemäß einem ersten bevorzugten Ausführungsbeispiel der Erfindung auf jedem im Kiefer 2 des Patienten befindlichen Implantat 4 ein sog. Abformpfosten 6 lösbar angeordnet, indem im dargestellten Ausführungsbeispiel die stiftförmigen Abformpfosten 6 teilweise in die jeweiligen Implantate 4 lösbar gesteckt werden. Dies ist in Fig. 2 gezeigt.

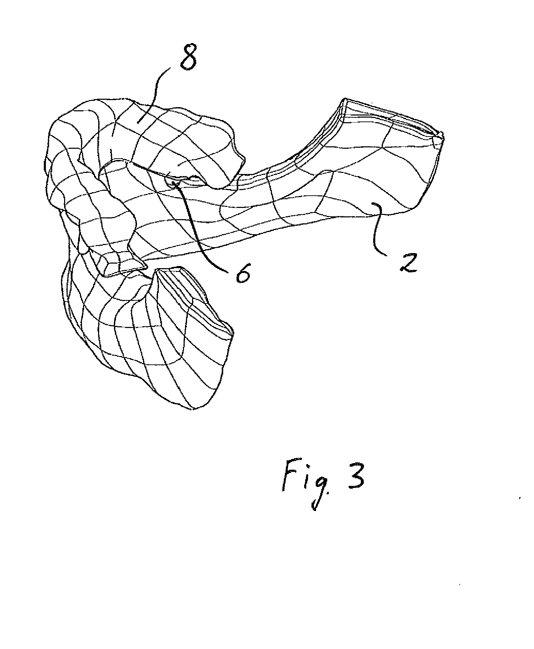

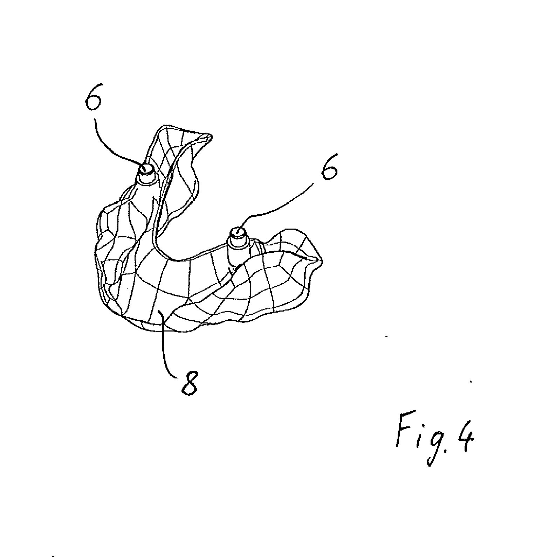

Anschließend wird geeignetes Abformmaterial auf den Kiefer 2 aufgebracht und mithilfe dieses Abformmaterials vom Kiefer 2 eine Abformung 8 hergestellt, wie Fig. 3 schematisch erkennen lässt. Dabei gelangt die Abformung 8 in Eingriff mit den aus dem Kiefer 2 ragenden und die freien Enden bildenden Abschnitte der Abformpfosten 6. Dies hat zur Folge, dass bei Abnahme vom Kiefer 2 die Abformpfosten 6 in der Abformung 8 stecken bleiben, somit sich also von den Implantaten 4 lösen und an der Abformung 8 verbleiben. Dies lässt Fig. 4 erkennen, in der die vom Kiefer abgenommene Abformung 8 in einer gegenüber Fig. 3 etwa umgedrehten perspektivischen Ansicht dargestellt ist.

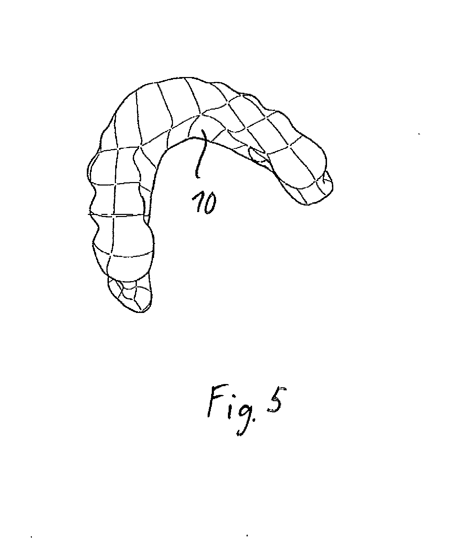

Die in Fig. 4 dargestellte Abformung 8 wird dann mithilfe einer nicht dargestellten Abtasteinrichtung gescannt, und aus den so erzeugten Scandaten werden die Positionierung und Ausrichtung, insbesondere Winkel, Höhe und Rotation, der in Fig. 1 gezeigten Implantate 4 in einer ebenfalls nicht dargestellten Berechnungseinrichtung ermittelt. Unter Verwendung der aus dieser Berechnung erhaltenen Daten erfolgt die Konstruktion der zahnprothetischen Struktur, und zwar bevorzugt unter Verwendung einer CAD-Software in einer Datenverarbeitungsanlage, die beispielsweise auch die zuvor erwähnte Berechnungseinrichtung enthält. Unter Verwendung der dadurch erzeugten Konstruktionsdaten findet die Fertigung auf einer in den Figuren ebenfalls nicht dargestellten numerisch gesteuerten Maschine statt. Als Ergebnis erhält man dann eine zahnprothetische Struktur, wie sie beispielsweise in Fig. 5 schematisch abgebildet und mit dem Bezugszeichen "10" gekennzeichnet ist. Schließlich wird diese zahnprothetische Struktur 10 auf dem Kiefer 2 durch Befestigung an den Implantaten 4 (Fig. 1) im Mund des Patienten angeordnet.

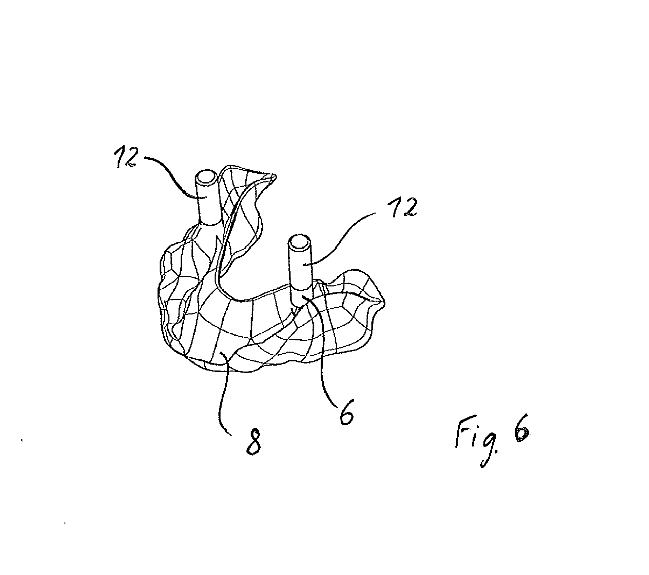

Gemäß einem zweiten Ausführungsbeispiel der vorliegenden Erfindung können geeignete Normteile für die Abtastung verwendet werden. Ein solches Verfahren unterscheidet sich von dem zuvor beschriebenen Ausführungsbeispiel dadurch, dass nach Herstellung der Abformung 8 an den nun in der Abformung 8 befindlichen Abformpfosten 6 geeignete Normteile 12 befestigt werden, wie Fig. 6 erkennen lässt. Im dargestellten Ausführungsbeispiel bestehen die Normteile 12 aus einer Hülse und werden auf die aus der Abformung 8 ragenden Abschnitte der Abformpfosten 6 lösbar aufgesteckt. Demnach wird das Verfahren gemäß dem zweiten Ausführungsbeispiel gegenüber dem zuvor beschriebenen Ausführungsbeispiel um einen zusätzlichen Verfahrensschritt erweitert, der zwischen den zuvor anhand der Figuren 4 und 5 beschriebenen Verfahrensschritten eingefügt wird. Die Normteile 12 entsprechen hinsichtlich ihrer Positionierung und Ausrichtung den Implantaten 4 im Kiefer 2 (Fig. 1), so dass dann aus einer Abtastung dieser Normteile 12 ebenfalls die Positionierung und Ausrichtung, insbesondere Winkel, Höhe und Rotation, der in Fig. 1 gezeigten Implantate 4 in der bereits erwähnten, nicht dargestellten Berechnungseinrichtung ermittelt werden.

Gemäß einem nicht dargestellten weiteren Ausführungsbeispiel der vorliegenden Erfindung können zwei geteilte Abformpfosten verwendet werden, die einen ersten Abschnitt und einen auf dem ersten Abschnitt lösbar angeordneten zweiten Abschnitt aufweisen. Bei der Herstellung der Abformung und somit der Abdrucknahme wird dann nicht der gesamte Abformpfosten, sondern nur dessen zweiter Abschnitt in die Abformung übernommen. Demgegenüber verbleibt der erste Abschnitt zumindest zunächst im Mund des Patienten und kann zu einem späteren Zeitpunkt in aller Ruhe vom zugehörigen Implantat gelöst und aus dem Mund des Patienten entfernt und als zweiter Abschnitt verwendet werden. Zusätzlich oder alternativ kann als erster Abschnitt ein Stift und als zweiter Abschnitt eine zum ersten Abschnitt passende und auf diesen aufsteckbare Hülse verwendet werden.

Bei einer bevorzugten Variante dieses Ausführungsbeispiels kann nach Abnahme der Abformung auch der erste Abschnitt eines Abformpfostens bzw. können die ersten Abschnitte der Abformpfosten vom zugehörigen Implantat im Kiefer des Patienten gelöst, aus dem Mund des Patienten entnommen und auf dem jeweiligen zweiten Abschnitt des zugehörigen Abformpfostens in der Abformung angeordnet werden, bevor die Abtastung stattfindet. Somit werden bei dieser Variante die Position und Ausrichtung der aus dem ersten Abschnitt und zweiten Abschnitt wieder zusammengesetzten vollständigen Abformpfosten in der Abformung erfasst. Diese Variante wird demnach nach Art der sog. "Reseating"-Technik angewandt, da nach der Abdrucknahme auch der erste Abschnitt aus dem Mund des Patienten entnommen und auf den in der Abformung bereits befindlichen zweiten Abschnitt des bzw. der Abformpfosten wieder angeordnet und somit in die Abformung zurückgesetzt wird.

Anstelle der zuvor erwähnten "Reseating"-Technik mit der zusätzlichen Entfernung des ersten Abschnittes der Abformpfosten aus dem Mund des Patienten kann bei einer anderen Variante ein geeignetes Normteil direkt auf dem dann bereits in der Abformung befindlichen zweiten Abschnitt der Abformpfosten aufgesetzt werden, um die dann aus dem zweiten Abschnitt des jeweiligen ursprünglichen Abformpfostens und dem aufgesetzten Normteil gebildete Anordnung entsprechend abzutasten.

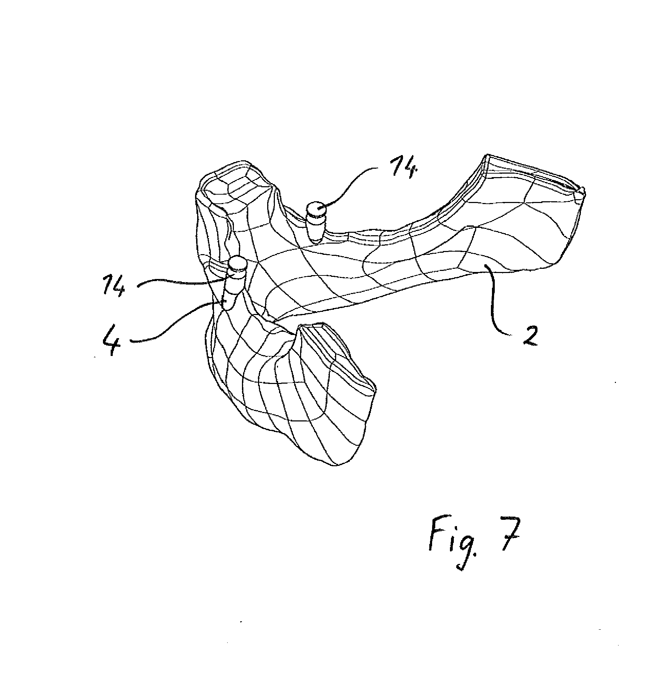

Gemäß einem weiteren Ausführungsbeispiel der vorliegenden Erfindung kann ein Verfahren zur Herstellung von implantatgetragenen zahnprothetischen Strukturen auch ohne Abdrucknahme durchgeführt werden. Hierzu entfallen die zuvor anhand der Figuren 2 bis 5 beschriebenen Verfahrensschritte. Stattdessen werden nach erfolgter Implantation der Implantate 4 in den Kiefer 2 (Fig. 1) vorgegebene Markierungselemente 14 nach Art einer Sonde direkt im Mund des Patienten auf den Implantaten 4 im Kiefer 2 lösbar angeordnet, wie in Fig. 7 dargestellt ist. Anschließend findet direkt im Mund des Patienten eine Abtastung des Kiefers 2 zur Erfassung von Position und Ausrichtung der Markierungselemente 14 statt. Wie Fig. 7 ferner erkennen lässt, sind im dargestellten Ausführungsbeispiel die Markierungselemente 14 als stift- oder pfostenförmiger Körper ausgebildet, die in koaxial fluchtender Anordnung in das jeweilige Implantat 4 gesteckt bzw. auf dieses aufgesetzt sind. Als Markierungselemente können beispielsweise für ein bestimmtes Implantatsystem spezifisch hergestellte, präzise Normteile oder vom Hersteller eines bestimmten Implantatsystems bereitgestellte Abdruckpfosten verwendet werden. Aus den so erzeugten Abtastdaten werden dann Daten errechnet, die die Positionierung und Ausrichtung, insbesondere Winkel, Höhe und Rotation, der im Kiefer 2 befindlichen Implantate 4 (Fig. 1) angeben. Unter Verwendung dieser Daten erfolgt dann die Konstruktion der zahnprothetischen Struktur. Mithilfe der so erzeugten Konstruktionsdaten findet eine Fertigung auf numerisch gesteuerten Maschinen statt, bevor die so hergestellte zahnprothetische Struktur, wie sie beispielsweise in Fig. 5 gezeigt und mit dem Bezugszeichen "10" gekennzeichnet ist, auf den Implantaten 4 im Kiefer 2 (Fig. 1) des Patienten befestigt wird.

Bei den zuvor beschriebenen Verfahren gemäß bevorzugter Ausführungsbeispiele der vorliegenden Erfindung ist es beispielsweise alternativ auch denkbar, aus den Scandaten Daten zu erzeugen, die virtuell ein Negativmodell beschreiben, und diese Modelldaten dann zur Ermittlung der Positionierung und Ausrichtung der Implantate 4 zu verwenden.

## Patentansprüche

1. Verfahren zur Herstellung von implantatgetragenen zahnprothetischen Strukturen (10), mit den Schritten,
(A) einen vorgegebenen Abformpfosten (6) jeweils auf mindestens einem Implantat (4) im Kiefer (2) eines Patienten lösbar anzuordnen,
(B) vom Kiefer (2) eine Abformung (8) aus geeignetem Abformmaterial so herzustellen, dass die Abformung (8) in Eingriff mit einem freien Ende des mindestens einen auf dem zugehörigen Implantat (4) angeordneten Abformpfostens (6) gelangt, und die Abformung (8) vom Kiefer (2) so abzunehmen, dass der mindestens eine Abformpfosten (6) von dem zugehörigen Implantat (4) gelöst wird und an der Abformung (8) verbleibt,
(C) die Position und Ausrichtung des mindestens einen Abformpfostens (6) in der Abformung (8) mit einer Abtasteinrichtung zu erfassen und entsprechende erste Daten zu erzeugen,
(D) aus den ersten Daten in einer Berechnungseinrichtung zweite Daten zu errechnen, die die Positionierung und Ausrichtung, insbesondere Winkel, Höhe und Rotation, des jeweiligen Implantates (4) angeben,
(E) unter Verwendung der zweiten Daten in der Berechnungseinrichtung eine gewünschte Konstruktion für die zahnprothetische Struktur (10) angebende dritte Daten zu erzeugen,
(F) unter Verwendung der dritten Daten auf einer numerisch gesteuerten Maschine die zahnprothetische Struktur (10) herzustellen und
(G) die so hergestellte zahnprothetische Struktur (10) auf den Implantaten (4) im Kiefer (2) des Patienten zu befestigen.

2. Verfahren nach Anspruch 1, bei welchem im Schritt (A) eine Mehrzahl von vorgegebenen Abformpfosten (6) auf einer entsprechenden Mehrzahl von Implantaten (4) lösbar angeordnet wird, im Schritt (B) vom Kiefer (2) eine Abformung (8) aus geeignetem Abformmaterial so hergestellt wird, dass die Abformung (8) in Eingriff mit den freien Enden der auf den Implantaten (4) angeordneten Abformpfosten (6) gelangt, und die Abformung (8) vom Kiefer (2) so abgenommen wird, dass die Abformpfosten (6) von den Implantaten (4) gelöst werden und an der Abformung (8) verbleiben, im Schritt (C) die Position und Ausrichtung der Abformpfosten (6) in der Abformung (8) erfasst und entsprechend erste Daten erzeugt werden und im Schritt (D) aus den ersten Daten zweite Daten errechnet werden, die die Positionierung und Ausrichtung der Implantate (4) angeben.

3. Verfahren nach Anspruch 1 oder 2, bei welchem im Schritt (C) zusätzlich zur Position und Ausrichtung des Abformpfostens (6) in der Abformung (8) auch die zu diesem benachbarte Umgebung erfasst wird.

4. Verfahren nach Anspruch 1, bei welchem nach dem Schritt (B) und vor dem Schritt (C) ein zusätzlicher Schritt (B1) ausgeführt wird, auf dem mindestens einen in der Abformung (8) befindlichen Abformpfosten (6) ein vorgegebenes Normteil (12) lösbar zu befestigen, und im Schritt (C) die Position und Ausrichtung des in der Abformung (8) auf dem zugehörigen Abformpfosten (6) befestigten Normteils (12) mit der Abtasteinrichtung erfasst und entsprechende Daten erzeugt werden.

5. Verfahren nach den Ansprüchen 2 und 4, bei welchem im Schritt (B1) auf den in der Abformung (8) befindlichen Abformpfosten (6) jeweils ein vorgegebenes Normteil (12) lösbar befestigt wird und im Schritt (C) die Position und Ausrichtung der in der Abformung (8) auf den Abformpfosten (6) befestigten Normteile (12) erfasst und entsprechend erste Daten erzeugt werden.

6. Verfahren nach Anspruch 3 sowie nach Anspruch 4 oder 5, bei welchem im Schritt (C) zusätzlich zur Position und Ausrichtung des in der Abformung (8) auf dem zugehörigen Abformpfosten (6) befestigten Normteils (12) auch die zu diesem benachbarte Umgebung erfasst wird.

7. Verfahren nach mindestens einem der Ansprüche 4 bis 6, bei welchem im Schritt (D) die ersten Daten durch in der Berechnungseinrichtung hinterlegte, zu dem jeweiligen Normteil (12) passende geometrische Daten ersetzt und aus diesen geometrischen Daten die Positionierung und Ausrichtung, insbesondere Winkel, Höhe und Rotation, des jeweiligen Implantates (4) angebende zweite Daten errechnet werden.

8. Verfahren nach mindestens einem der vorangegangenen Ansprüche, bei welchem im Schritt (D) in der Berechnungseinrichtung aus den zweiten Daten ein Negativmodell beschreibende vierte Daten erzeugt und im Schritt (E) anstelle der zweiten Daten die vierten Daten verwendet werden, um die eine gewünschte Konstruktion für die zahnprothetische Struktur (10) angebenden dritten Daten zu erzeugen.

9. Verfahren nach mindestens einem der vorangegangenen Ansprüche, bei welchem im Schritt (D) zweite Daten errechnet werden, die die Positionierung und Ausrichtung, insbesondere Winkel, Höhe und Rotation, des jeweiligen Implantates relativ zu einem für alle im Kiefer befindlichen Implantate (4) geltenden definierten Bezugspunkt angeben.

10. Verfahren zur Herstellung von implantatgetragenen, zahnprothetischen Strukturen (10), mit den Schritten,
(A) einen vorgegebenen Abformpfosten, der einen ersten Abschnitt und einen auf dem ersten Abschnitt lösbar angeordneten zweiten Abschnitt aufweist, mit dem ersten Abschnitt jeweils auf mindestens einem Implantat (4) im Kiefer (2) eines Patienten lösbar anzuordnen,
(B) vom Kiefer (2) eine Abformung (8) aus geeignetem Abformmaterial so herzustellen, dass die Abformung (8) in Eingriff mit einem freien Ende des zweiten Abschnittes des mindestens einen auf dem zugehörigen Implantat (4) angeordneten Abformpfostens gelangt, und die Abformung (8) vom Kiefer (2) so abzunehmen, dass der zweite Abschnitt vom ersten Abschnitt des mindestens einen Abformpfostens gelöst wird und an der Abformung (8) verbleibt,
(C) die Position und Ausrichtung des zweiten Abschnittes des Abformpfostens in der Abformung (8) mit einer Abtasteinrichtung zu erfassen und entsprechende erste Daten zu erzeugen,
(D) aus den ersten Daten in einer Berechnungseinrichtung zweite Daten zu errechnen, die die Positionierung und Ausrichtung, insbesondere Winkel, Höhe und Rotation, des jeweiligen Implantates (4) angeben,
(E) unter Verwendung der zweiten Daten in der Berechnungseinrichtung eine gewünschte Konstruktion für die zahnprothetische Struktur (10) angebende dritte Daten zu erzeugen,
(F) unter Verwendung der dritten Daten auf einer numerisch gesteuerten Maschine die zahnprothetische Struktur (10) herzustellen und
(G) die so hergestellte zahnprothetische Struktur (10) auf den Implantaten (4) im Kiefer (2) des Patienten zu befestigen.

11. Verfahren nach Anspruch 10, bei welchem als zweiter Abschnitt des mindestens einen Abformpfostens ein Normteil verwendet wird.

12. Verfahren nach Anspruch 10 oder 11, bei welchem als erster Abschnitt des mindestens einen Abformpfostens ein Stift und als zweiter Abschnitt des mindestens einen Abformpfostens eine zum ersten Abschnitt passende und auf diesen aufsteckbare Hülse verwendet wird.

13. Verfahren nach mindestens einem der Ansprüche 10 bis 12, bei welchem nach Schritt (B) und vor Schritt (C) zusätzlich ein Schritt (B1) durchgeführt wird, den ersten Abschnitt des mindestens einen Abformpfostens vom Implantat (4) im Kiefer (2) des Patienten zu lösen und am zweiten Abschnitt des mindestens einen Abformpfostens in der Abformung (8) anzuordnen, und im Schritt (C) die Position und Ausrichtung des mindestens einen aus dem ersten Abschnitt und dem zweiten Abschnitt wieder zusammengesetzten vollständigen Abformpfostens in der Abformung (8) mit einer Abtasteinichtung erfasst und entsprechende erste Daten erzeugt werden.

14. Verfahren nach mindestens einem der Ansprüche 10 bis 12, bei welchem nach Schritt (B) und vor Schritt (C) zusätzlich ein Schritt (B1) durchgeführt wird, auf dem in der Abformung (8) befindlichen zweiten Abschnitt des mindestens einen Abformpfostens ein vorgegebenes Normteil lösbar zu befestigen, und im Schritt (C) die Position und Ausrichtung des in der Abformung (8) auf dem zweiten Abschnitt des zugehörigen Abformpfostens befestigten Normteils mit einer Abtasteinrichtung erfasst und entsprechende erste Daten erzeugt werden.

15. Verfahren zur Herstellung von implantatgetragenen zahnprothetischen Strukturen, mit den Schritten
(A) ein vorgegebenes Markierungselement (14) jeweils auf mindestens einem Implantat (4) im Kiefer (2) eines Patienten lösbar anzuordnen,
(B) die Position und Ausrichtung des auf dem zugehörigen Implantat (4) im Kiefer (2) des Patienten befestigten Markierungselement (14) im Mund des Patienten mit einer Abtasteinrichtung zu erfassen und entsprechende erste Daten zu erzeugen,
(C) aus den ersten Daten in einer Berechnungseinrichtung zweite Daten zu errechnen, die die Positionierung und Ausrichtung, insbesondere Winkel, Höhe und Rotation, des jeweiligen Implantates (4) angeben,
(D) unter Verwendung der zweiten Daten in der Berechnungseinrichtung eine gewünschte Konstruktion für die zahnprothetische Struktur (10) angebende dritte Daten zu erzeugen,
(E) unter Verwendung der dritten Daten auf einer numerisch gesteuerten Maschine die zahnprothetische Struktur (10) herzustellen und
(F) die so hergestellte zahnprothetische Struktur (10) auf dem mindestens einem Implantat (4) im Kiefer (2) des Patienten zu befestigen.

16. Verfahren nach Anspruch 15, bei welchem als Markierungselement ein Abtastpfosten und/oder ein vorgegebenes Normteil verwendet wird.

17. Verfahren nach Anspruch 15 oder 16, bei welchem im Schritt (A) eine Mehrzahl von vorgegebenen Markierungselementen (14) auf einer entsprechenden Mehrzahl von Implantaten (4) lösbar angeordnet wird, im Schritt (B) die Position und Ausrichtung der auf den Implantaten (4) befestigten Markierungselemente (14) erfasst und entsprechend erste Daten erzeugt werden, im Schritt (C) aus den ersten Daten zweite Daten errechnet werden, die die Positionierung und Ausrichtung der Implantate (4) angeben, und im Schritt (F) die hergestellte zahnprothetische Struktur (10) auf den Implantaten (4) befestigt wird.

18. Verfahren nach mindestens einem der Ansprüche 15 bis 17, bei welchem im Schritt (B) zusätzlich zur Position und Ausrichtung des auf dem zugehörigen Implantat (4) befestigten Markierungselements (14) auch die zu diesem benachbarte Umgebung erfasst wird.

19. Verfahren nach mindestens einem der Ansprüche 15 bis 18, bei welchem im Schritt (C) in der Berechnungseinrichtung aus den zweiten Daten ein Negativmodell beschreibende vierte Daten erzeugt und im Schritt (D) anstelle der zweiten Daten die vierten Daten verwendet werden, um die eine gewünschte Konstruktion für die zahnprothetische Struktur (10) angebenden dritten Daten zu erzeugen.

20. Verfahren nach mindestens einem der Ansprüche 15 bis 19, bei welchem im Schritt (C) die ersten Daten durch in der Berechnungseinrichtung hinterlegte, zu dem jeweiligen Markierungselement (14) passende geometrische Daten ersetzt und aus diesen geometrischen Daten die Positionierung und Ausrichtung, insbesondere Winkel, Höhe und Rotation, des jeweiligen Implantates (4) angebende zweite Daten errechnet werden.

21. Verfahren nach mindestens einem der Ansprüche 15 bis 20, bei welchem im Schritt (C) zweite Daten errechnet werden, die die Positionierung und Ausrichtung, insbesondere Winkel, Höhe und Rotation, des jeweiligen Implantates (4) relativ zu einem für alle Implantate (4) geltenden definierten Bezugspunkt angeben.
